# EUROPÄISCHE PATENTSCHRIFT

(11) **EP 3 626 380 B1**
(45) Veröffentlichungstag und Bekanntmachung des Hinweises auf die Patenterteilung: **04.06.2025**
(21) Anmeldenummer: 19181171.0
(22) Anmeldetag: 19.06.2019
(51) Int. Cl.: B60R 21/2165, B23K 26/03, B23K 26/382, B23K 26/70

(54) **SENSOREINRICHTUNG ZUR SCANNENDEN LASERBEARBEITUNG EINES WERKSTÜCKES MITTELS EINES UM EINEN DREHPUNKT AUSGELENKTEN LASERSTRAHLS**
SENSOR DEVICE FOR SCANNING LASER MACHINING OF A WORKPIECE BY MEANS OF A LASER BEAM ROTATING AROUND A POINT
DISPOSITIF DE DÉTECTION DESTINÉ À L'USINAGE LASER À BALAYAGE D'UNE PIÈCE AU MOYEN D'UN FAISCEAU LASER DÉVIÉ PAR UN POINT DE ROTATION

(30) Priorität: 13.07.2018 DE 102018116998
(43) Veröffentlichungstag der Anmeldung: 25.03.2020
(73) Patentinhaber: JENOPTIK Automatisierungstechnik GmbH, 07745 Jena (DE)
(72) Erfinder: WITTENBECHER, Wolfgang, 07768 Gumperda (DE); GRIEBEL, Martin, 07743 Jena (DE)
(74) Vertreter: Gleim Petri Patent- und Rechtsanwaltspartnerschaft mbB

(56) Entgegenhaltungen:
- EP-A1- 0 991 551
- EP-A2- 2 962 800
- EP-B1- 0 991 551
- DE-A1- 19 949 501
- US-A- 4 914 284
- US-A1- 2016 067 821

## Beschreibung

Die Erfindung betrifft eine Sensoreinrichtung, die eine Anordnung von Sensoren enthält, mit denen bei einer Bearbeitung eines Werkstückes mit einem über das Werkstück scannenden Laserstrahl entlang einer Sollbruchlinie ein Materialabtrag erfolgt, bis durch die Sensoren ein durch das Werkstück transmittierender Anteil des Laserstrahls detektiert wird. Eine gattungsgemäße Sensoreinrichtung ist aus der US 4 914 284 A bekannt.

Die Herstellung von Sollbruchlinien in Ausstattungselemente eines Fahrzeuges, z. B. für Airbagöffnungen im Armaturenbrett, in der Türverkleidung oder in der Lenkradnabe oder als Bruchstellen an in den Fahrgastraum ragenden Bauteilen, wie z. B. Tassenhaltern, mittels Laser, ist seit Langem bekannt. Aufgrund der hohen Anforderungen zum einen an deren zuverlässiges Aufbrechen im Bedarfsfall und zum anderen an ein ästhetisches Erscheinungsbild der Ausstattungsteile, bei dem ein Fahrzeuginsasse die Sollbruchöffnungen mit bloßem Auge nicht wahrnehmen soll, wird der Materialabtrag entlang der die Sollbruchöffnungen umschreibenden Sollbruchlinien sensorgesteuert. Auch bei anderen Anwendungen, z. B. in der Verpackungsindustrie, ist es bekannt, Sollbruchlinien als Auftrennhilfen in Behältern u.ä. einzubringen. Um eine Sollbruchlinie durch einen Materialabtrag mittels Laser herzustellen, werden in das betreffende Werkstück nicht vollständig durchtrennende Schlitze oder Löcher bzw. so genannte Mikroperforationslöcher, die das Werkstück nur mit einem sehr kleinen Loch durchdringen, eingebracht. Durch die Sensorüberwachung kann hierbei entweder eine reproduzierbare verbleibende definierte Restwandstärke oder kleine Löcher mit einem reproduzierbaren Durchmesser entlang der Sollbruchlinie hergestellt werden, indem bei Detektion von durch die Restwand oder das Loch transmittierender Strahlungsenergie die Überschreitung eines vorgegebenen Schwellwertes als Steuergröße verwendet wird. Dazu ist wenigstens ein Sensor auf einer dem Laser gegenüberliegenden Seite des Werkstückes (Sichtseite) angeordnet, der während der Bearbeitung einen transmittierenden Anteil der Bearbeitungslaserstrahlung dann detektiert, wenn das Werkstück innerhalb der Sollbruchlinie am jeweiligen Bearbeitungspunkt nur noch eine bestimmte Restwandstärke oder bereits ein Mikroloch aufweist. Die erforderliche Relativbewegung zur Erzeugung von Sollbruchlinien mittels einer Energiestrahlung kann grundsätzlich durch den Laserstrahl als Werkzeug oder das Werkstück erzeugt werden, wobei sich die Bewegung des Laserstrahls als einfacher zu realisieren ergeben hat. Im Vergleich zu einer robotergesteuerten Führung einer Laserquelle oberhalb und entlang der Sollbruchlinie ist ein zwei- bzw. dreidimensionales Scannen eines Laserstrahls entlang der Sollbruchlinie technisch einfach umsetzbar und erlaubt darüber hinaus eine deutlich schnellere Bearbeitung. Schwieriger gestaltet sich hier jedoch die Anordnung und insbesondere die Ausrichtung der Sensoren, die nicht in einem Array mit gleicher Ausrichtung ihrer Sensorachsen angeordnet werden können, wenn der Laserstrahl durch Auslenkung eines Spiegels scannend geführt wird, da hierbei der Laserstrahl in jedem Bearbeitungspunkt entlang der Sollbruchlinie in einem unterschiedlichen Winkel auf das Werkstück auftrifft. Davon ausgehend, dass der Laserstrahl beim Führen entlang der Sollbruchlinie auf die Rückseite des Werkstückes fokussiert bzw. bei Werkstücken größerer Wandstärke eventuell während des Abtrags auf die aktuelle Abtragstiefe nachfokussiert wird, müssen die Sensoren in einem gleichen Abstand zur Sichtseite angeordnet sein und jeweils in Richtung des scannenden Laserstrahls blicken, das heißt die Sensorachsen, die jeweils orthogonal auf einer strahlungsempfindlichen Empfangsfläche der Sensoren stehen, sind in Richtung des gegebenenfalls direkt auftreffenden Laserstrahls ausgerichtet, wenn dieser entlang der Sollbruchlinie gescannt wird. Insbesondere bei ausgedehnten Werkstücken mit größere Sollbruchöffnungen beschreibenden Sollbruchlinien, wie es eine Airbagaustrittsöffnung in einer Armaturentafel ist, ist der Aufwand für die Anfertigung und Montage einer hierfür geeigneten Sensoreinrichtung, enthaltend die Sensoren und eine Halteeinrichtung, in der die Sensoren zueinander angeordnet und ausgerichtet sind, aufwendig. Soll an einem gleichen Werkstück eine Sollbruchlinie mit einer geänderten Linienführung hergestellt werden, bedarf es einer anderen Halteeinrichtung oder zumindest einer konstruktiven Veränderung an der Halteeinrichtung.

Aus der US 4 914 284 A ist ein optischer Weitwinkel-Sensorkopf bekannt, der eine Halterung in Form einer Montageplatte aufweist, in der die Einzeloptiken so angeordnet sind, dass die Richtungen ihrer optischen Achsen einen gemeinsamen Schnittpunkt vor dem Sensorkopf aufweisen. Die Halteeinrichtung ist damit individuell für eine vorgegebene Anordnung der Einzeloptiken ausgelegt.

Es ist die Aufgabe der Erfindung, eine Sensoreinrichtung für eine scannende Laserbearbeitung eines Werkstückes mit einer Halteeinrichtung zu schaffen, die eine örtlich flexible und veränderbare Anordnung der Sensoren erlaubt und einfach herstellbar ist.

Diese Aufgabe wird gelöst durch eine Sensoreinrichtung zur scannenden Laserbearbeitung eines Werkstückes mittels eines um einen Drehpunkt ausgelenkten Laserstrahls, mit einer Halteeinrichtung und wenigstens zwei Sensoren, wobei die Halteeinrichtung aus einer matrix- oder wabenstrukturförmigen Anordnung von fest miteinander verbundenen Hülsen gebildet ist, bestehend aus einzelnen, wenigstens einseitig offenen Hülsen, jeweils eine Hülsenachse aufweisend, wobei sich die Hülsenachsen in einem Schnittpunkt außerhalb der Halteeinrichtung schneiden, und die wenigstens zwei Sensoren, die jeweils eine Sensorachse aufweisen, jeweils in einer der Hülsen so angeordnet sind, dass deren Sensorachse mit der Hülsenachse zusammenfällt.

Vorteilhafte Ausführungen sind in den Unteransprüchen angegeben.

Besonders vorteilhaft ist die Halteeinrichtung als ein monolithisches Bauteil durch ein generatives Verfahren, auch als 3D-Druck bezeichnet, hergestellt. Dieses Verfahren bietet neben seiner Schnelligkeit des gesamten Herstellungsprozesses bei minimalem Materialeinsatz als Vorteil insbesondere, dass ein Bauteil auch mit Hinterschneidungen hergestellt werden kann, die sich bei einer Ausführung des Hülseninneren als eine Steckverbindung für einen Sensor nur schwer vermeiden lassen. Insbesondere, wenn in der Halteeinrichtung eine große Anzahl von Sensoren mit einer hohen lokalen Auflösung wahlweise angeordnet werden sollen, ist die Ausführung der Halteeinrichtung, gebildet durch eine matrix- oder wabenstrukturförmigen Anordnung von Hülsen, die weitestgehend auf die Größe der Sensoren reduziert werden können und monolithisch oder stoffschlüssig miteinander verbunden sind, sehr günstig. Eine solche Anordnung von fest miteinander verbundenen Hülsen führt zu einer hohen inneren Stabilität des Bauteils, auch wenn die Hülsenwände dünn ausgeführt sind. Dabei können der äußere Querschnitt und der innere Querschnitt der Hülsen verschiedene Formen aufweisen und die Hülsenwände ineinander übergehen. Die Anordnung der Hülsen kann im weitesten Sinne auch von Durchgangsbohrungen oder Sacklochbohrungen in einer Platte gebildet sein. Die Innenkontur der Hülsen ist vorteilhaft so ausgeführt, dass die Sensoren über eine Steckverbindung in der Hülse zentriert gehalten werden, so dass die Sensorachsen der eingefügten Sensoren und die Hülsenachsen jeweils zusammenfallen und sich in einem Schnittpunkt schneiden, um dem während der Bearbeitung eines Werkstückes der Bearbeitungslaserstrahl ausgelenkt werden kann. Auf Grund der nur geringen Strahlungsleistung, die bei der Bearbeitung des Werkstückes durch das Werkstück transmittiert, kann die Halteeinrichtung aus einem Kunststoff hergestellt werden und ist damit bestens geeignet, um als Spritzgussteil oder insbesondere um im 3D-Druck hergestellt zu werden. Die Sensoren können bei Bedarf, z. B. bei einer Änderung der Schneidlinienführung, in eine andere Hülse umgesteckt werden.

Die Erfindung soll nachfolgend anhand von Ausführungsbeispielen mit Hilfe von Zeichnungen näher erläutert werden. Hierzu zeigen:
- Fig. 1: ein zu bearbeitendes Werkstück und eine hierzu angeordnete Sensoreinrichtung,
- Fig. 2a: ein Schnittbild durch eine am Werkstück über eine Paarungsfläche anliegende Sensoreinrichtung,
- Fig. 2b: ein Schnittbild durch eine am Werkstück über Abstandshalter anliegende Sensoreinrichtung,
- Fig. 3a: eine erste Ausführung einer Hülse zur Aufnahme eines Sensors und
- Fig. 3b: eine zweite Ausführung einer Hülse zur Aufnahme eines Sensors.

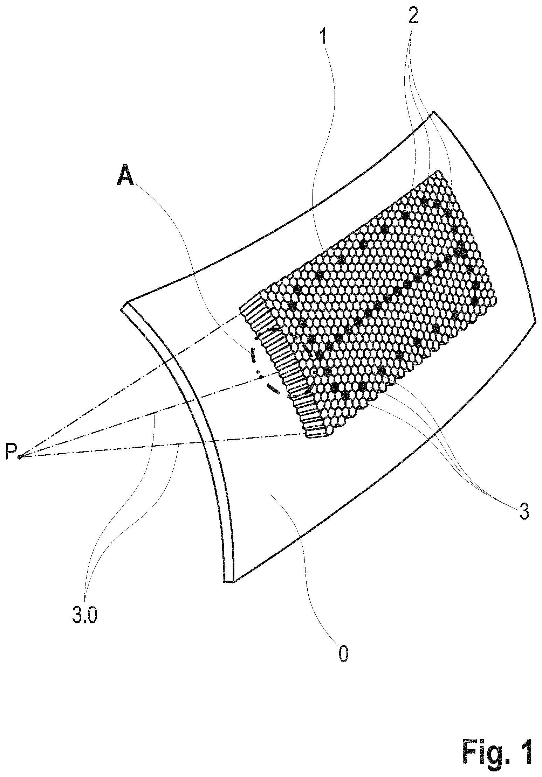

In **Fig.1** ist eine erfindungsgemäße Sensoreinrichtung zur Bearbeitung eines Werkstückes 0 mittels eines scannenden Laserstrahls, der um einen Drehpunkt ausgelenkt wird, bestimmungsgemäß auf einer Rückseite des Werkstückes 0 angeordnet, dargestellt. Auf eine Vorderseite des Werkstückes 0 wird der um einen Drehpunkt auslenkbare Laserstrahl gerichtet, der je nach Grad der Auslenkung in einem anderen Winkel auf das Werkstück 0 auftrifft. Damit ein durch das Werkstück 0 transmittierender Anteil des Laserstrahls optimal von einem dem Werkstück 0 nachgeordneten Sensor 2 detektiert werden kann, muss die Sensorachse 2.0 (in Fig. 1 nicht dargestellt) des Sensors 2, die orthogonal auf der strahlungsempfindlichen Empfangsfläche des Sensors 2 steht, in Richtung des auftreffenden Laserstrahls gerichtet sein, das heißt die Sensorachsen 2.0 müssen sich in dem Drehpunkt schneiden.

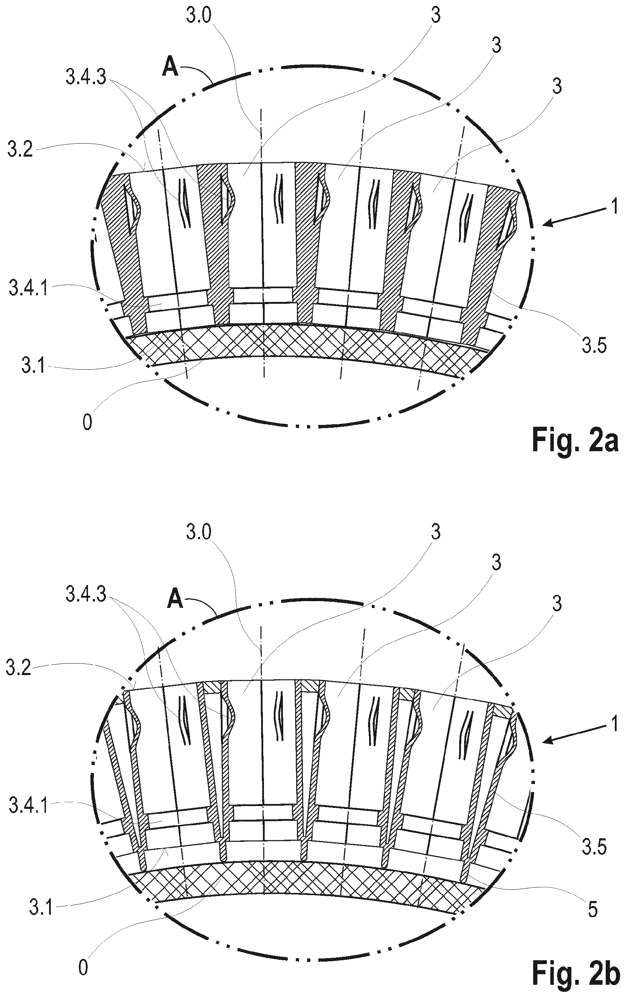

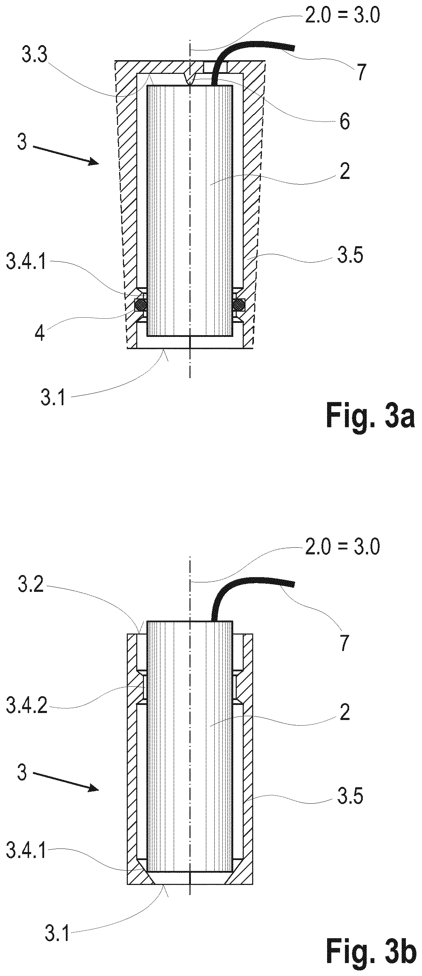

Eine erfindungsgemäße Sensoreinrichtung enthält grundsätzlich eine Halteeinrichtung 1 und wenigstens zwei Sensoren 2. Die Halteeinrichtung 1 weist eine matrix- oder, wie in Fig. 1 gezeigt, eine wabenstrukturförmige Anordnung von Hülsen auf, bestehend aus einzelnen Hülsen 3. Die Hülsen 3 weisen, wie in den Fig. 2a und 2b gezeigt, jeweils eine Hülsenachse 3.0 und eine Hülsenwand 3.5 auf, die durch eine erste Stirnfläche 3.1 und eine zweite Stirnfläche 3.2 (siehe **Fig. 3b**) oder eine Bodenfläche 3.3 (siehe **Fig. 3a**) begrenzt ist,

Damit die in die Hülsen 3 eingesetzten Sensoren 2 jeweils in Richtung eines auftreffenden Laserstrahls ausgerichtet sind, sind die Hülsen 3 so zueinander angeordnet, dass die Hülsenachsen 3.0 sich in einem Schnittpunkt P seitens der ersten Stirnflächen 3.1 außerhalb der Halteeinrichtung 1 schneiden. Um diesen Schnittpunkt P wird während der Bearbeitung der Laserstrahl abgelenkt, das heißt die Sensoreinrichtung wird so zu einer den Laserstrahl scannenden Vorrichtung angeordnet, dass der Schnittpunkt P auf den Drehpunkt fällt, um den der Laserstrahl ausgelenkt wird. Die Innenkontur der Hülsen 3 ist so ausgeführt, dass die Sensoren 2 mit dem Einführen in die Hülse 3 innerhalb der Hülse 3 zentriert gehalten werden, so dass deren Sensorachse 2.0 mit der Hülsenachse 3.0 zusammenfällt.

Vorteilhaft bilden die ersten Stirnflächen 3.1 gemeinsam eine zusammenhängende Paarungsfläche, die der Oberflächenkontur des Werkstückes 0 in einem Bearbeitungsbereich angepasst ist. Angepasst heißt hier, dass die Paarungsfläche eine gleiche Oberflächenkontur aufweist, wie das Werkstück 0 im Bearbeitungsbereich eine Oberflächenkontur aufweist, oder eine annähernd gleiche Oberflächenstruktur aufweist, wobei die Mittelpunkte der ersten Stirnflächen 3.1 jeweils auf einer gedachten Fläche mit gleicher Kontur, wie es das Werkstück 0 aufweist, liegen. Die Sensoreinrichtung kann somit, wie in **Fig. 2a** gezeigt, mit ihrer Paarungsfläche direkt an die Oberfläche des Werkstückes 0 angelegt werden. Die in der Sensoreinrichtung jeweils in einer Hülse 3 angeordneten Sensoren 2 weisen dann jeweils einen gleichen senkrechten Abstand zum Werkstück 0 auf. Bei den in den **Fig. 2a und 2b** dargestellten Hülsen 3 sind anstelle eines zweiten Bundes 3.4.2 beispielhaft drei Federelemente 3.4.3 an der Hülsenwand 3.5 ausgebildet. Grundsätzlich ist jegliche Innengestaltung und auch jede Innenkontur der Hülse 3, z. B. mehreckig oder rund, möglich, solange sie geeignet ist, den Sensor 2 in sich so aufzunehmen, dass dessen Sensorachse 2.0 mit der Hülsenachse 3.0 zusammenfällt. Vorteilhaft, insbesondere für eine Herstellung in einem 3D-Druckverfahren, ist eine Hülsenform, bei der eine äußere Umfangslinie des Querschnittes der Hülse 3 eine sechseckige Form und eine innere Umfangslinie des Querschnittes der Hülse 3 eine Kreisform aufweist.

Alternativ zu einer gebildeten Paarungsfläche sind an einigen der ersten Stirnflächen 3.1 Abstandshalter 5 ausgebildet, an denen das Werkstück 0 angelegt werden kann, wie in **Fig. 2b** dargestellt.

Vorteilhaft weist die Sensoreinrichtung mehr Hülsen 3 als Sensoren 2 auf, womit die Sensoren 2 ein auswählbares Muster bildend zueinander angeordnet sind. Das Muster ist bestimmt durch den Linienverlauf einer Sollbruchlinie, die in das Werkstück 0 einzubringen ist und entlang der der Laserstrahl über das Werkstück 0 gescannt wird.

Die Innenkontur der Hülsen 3 ist so ausgeführt, dass sie eine Steckverbindung für die Sensoren 2 bietet. So ist vorteilhaft in den Hülsen 3 jeweils ein erster Bund 3.4.1 ausgebildet, innerhalb dessen oder an dem jeweils einer der Sensoren 2 gehalten ist.

Vorteilhaft weisen der erste und gegebenenfalls ein zweiter Bund 3.4.1, 3.4.2 jeweils eine kreisringförmige Innenkontur und die Sensoren 2 eine zylinderförmige Außenkontur auf.

Gemäß einem ersten Ausführungsbeispiel für die Hülse 3, dargestellt in **Fig. 3a****,** weisen die ersten Bünde 3.4.1 jeweils eine die Hülsenachse 3.0 konzentrisch umschließende Stirnfläche auf, in der eine ringförmige Nut ausgebildet ist, in der ein Dichtring 4 angeordnet ist, der den Sensor 2 kraftschlüssig umschließt. In diesem Ausführungsbeispiel ist die Hülsenwand 3.5 beispielhaft einseitig durch eine Bodenfläche 3.3 begrenzt und damit bis auf eine Öffnung für ein Medienkabel 7, verbunden mit dem Sensor 2, einseitig geschlossen. An der Bodenfläche 3.3 ist mittig eine Erhebung 6 gezeigt, an die der Sensor 2 beim Montieren in die Hülse 3 angelegt wird und dann über die Erhebung 6 und den Dichtring 4 zentriert gehalten wird.

Gemäß einem zweiten Ausführungsbeispiel für eine Hülse 3, dargestellt in **Fig. 3b****,** weisen die ersten Bünde 3.4.1 jeweils eine dem zweiten Bund 3.4.2 zugewandte konische Innenfläche auf, an der der Sensor 2 kraftschlüssig, zentriert angelegt ist.

Vorteilhaft ist die Halteeinrichtung 1 ein monolithisches Bauteil, das in einem generativen Herstellungsverfahren hergestellt wurde. Zusätzliche Kleinteile zum Fixieren der Sensoren 2 in den Hülsen 3, wie ein Dichtgummi oder Federelemente 3.4.3, können in dafür vorgesehene Nuten in den Hülsenwänden 3.5 eingesetzt sein.

### Bezugszeichenliste

- 0: Werkstück
- 1: Halteeinrichtung
- 2: Sensor
- 2.0: Sensorachse
- 3: Hülse
- 3.0: Hülsenachse
- 3.1: erste Stirnfläche (der Hülse 3)
- 3.2: zweite Stirnfläche (der Hülse 3)
- 3.3: Bodenfläche (der Hülse 3)
- 3.4.1: erster Bund (an der Hülse 3)
- 3.4.2: zweiter Bund (an der Hülse 3)
- 3.4.3: Federelement (an der Hülse 3)
- 3.5: Hülsenwand
- 4: Dichtring
- 5: Abstandshalter
- 6: Erhebung
- 7: Medienkabel

- P: Schnittpunkt (der Hülsenachsen 3.0)

## Patentansprüche

1. Sensoreinrichtung zur scannenden Laserbearbeitung eines Werkstückes (0) mittels eines um einen Drehpunkt ausgelenkten Laserstrahls,
mit einer Halteeinrichtung (1) und wenigstens zwei Sensoren (2), **dadurch gekennzeichnet, dass**
die Halteeinrichtung (1) aus einer matrix- oder wabenstrukturförmigen Anordnung von fest miteinander verbundenen Hülsen gebildet ist, bestehend aus einzelnen, wenigstens einseitig offenen Hülsen (3), jeweils eine Hülsenachse (3.0) aufweisend, wobei sich die Hülsenachsen (3.0) in einem Schnittpunkt (P) außerhalb der Halteeinrichtung (1) schneiden, und
die wenigstens zwei Sensoren (2), die jeweils eine Sensorachse (2.0) aufweisen, jeweils in einer der Hülsen (3) so angeordnet sind, dass deren Sensorachse (2.0) mit der Hülsenachse (3.0) zusammenfällt.

2. Sensoreinrichtung nach Anspruch 1, **dadurch gekennzeichnet, dass** die Hülsen (3) jeweils eine Hülsenwand (3.5) aufweisen, die durch eine erste Stirnfläche (3.1) und eine zweite Stirnfläche (3.2) oder eine Bodenfläche (3.3) begrenzt ist, und sich der Schnittpunkt (P) seitens der ersten Stirnflächen (3.1) befindet.

3. Sensoreinrichtung nach Anspruch 2, **dadurch gekennzeichnet, dass** die ersten Stirnflächen (3.1) gemeinsam eine zusammenhängende Paarungsfläche bilden, die der Oberflächenkontur des zu bearbeitenden Werkstückes (0) in einem Bearbeitungsbereich angepasst ist.

4. Sensoreinrichtung nach Anspruch 2 oder 3, **dadurch gekennzeichnet, dass** an wenigstens einigen der ersten Stirnflächen (3.1) von der Halteeinrichtung (1) weg gerichtete Abstandshalter (5) ausgebildet sind, an denen das zu bearbeitende Werkstück (0) angelegt werden kann.

5. Sensoreinrichtung nach Anspruch 1, **dadurch gekennzeichnet, dass** die Sensoreinrichtung mehr Hülsen (3) als Sensoren (2) aufweist, womit die wenigstens zwei Sensoren (2) ein auswählbares Muster bildend zueinander angeordnet sind.

6. Sensoreinrichtung nach Anspruch 1, **dadurch gekennzeichnet, dass** in den Hülsen (3) jeweils ein erster und ein zweiter Bund (3.4.1, 3.4.2) ausgebildet sind, innerhalb derer jeweils einer der Sensoren (2) gehalten ist.

7. Sensoreinrichtung nach Anspruch 6, **dadurch gekennzeichnet, dass** der erste und der zweite Bund (3.4.1, 3.4.2) jeweils eine kreisringförmige Innenkontur aufweisen und die Sensoren (2) eine zylinderförmige Außenkontur aufweisen.

8. Sensoreinrichtung nach Anspruch 6, **dadurch gekennzeichnet, dass** die ersten Bünde (3.4.1) jeweils eine die Hülsenachse (3.0) konzentrisch umschließende Stirnfläche aufweisen, in der eine ringförmige Nut ausgebildet ist, in der ein Dichtring (4) angeordnet ist, der einen der Sensoren (2) kraftschlüssig umschließt.

9. Sensoreinrichtung nach Anspruch 6, **dadurch gekennzeichnet, dass** die ersten Bünde (3.4.1) jeweils eine konische Innenfläche aufweisen, an der einer der Sensoren (2) kraftschlüssig, zentriert angelegt ist.

10. Sensoreinrichtung nach einem der vorherigen Ansprüche, **dadurch gekennzeichnet, dass**
die Halteeinrichtung (1) ein monolithisches Bauteil ist.

11. Sensoreinrichtung, nach Anspruch 10, **dadurch gekennzeichnet, dass** eine äußere Umfangslinie des Querschnittes einer Hülse (3) eine sechseckige Form und eine innere Umfangslinie des Querschnittes einer Hülse (3) eine Kreisform aufweist.

## Claims

1. A sensor device for scanning laser machining of a workpiece (0) by means of a laser beam rotating around a point,
comprising a holding device (1) and at least two sensors (2), **characterized in that** the holding device (1) is formed by a matrix- or honeycomb-shaped arrangement of firmly interconnected sleeves, consisting of individual sleeves (3) open on at least one side, each having a sleeve axis (3.0),
the sleeve axes (3.0) intersecting at a point of intersection (P) outside the holding device (1), and
the at least two sensors (2), each having a sensor axis (2.0), each being arranged in one of the sleeves (3) such that their sensor axis (2.0) coincides with the sleeve axis (3.0).

2. The sensor device according to claim 1, **characterized in that** the sleeves (3) each have a sleeve wall (3.5) which is bounded by a first end face (3.1) and a second end face (3.2) or a bottom face (3.3), and the point of intersection (P) is located on the side of the first end faces (3.1).

3. The sensor device according to claim 2, **characterized in that** the first end faces (3.1) together form a contiguous mating surface which is adapted to the surface contour of the workpiece (0) in a machining area.

4. The sensor device according to claim 2 or 3, **characterized in that** some of the first end faces (3.1) are provided with spacers (5) facing away from the holding device (1), against which spacers (5) the workpiece (0) can be applied.

5. The sensor device according to claim 1, **characterized in that** sensor device has more sleeves (3) than sensors (2), which means that the at least two sensors (2) are mutually arranged with respect to one another to form a selectable pattern.

6. The sensor device according to claim 1, **characterized in that** in each of the sleeves (3) first and second collars (3.4.1, 3.4.2) are formed, within which one of the sensors (2) is held.

7. The sensor device according to claim 6, **characterized in that** the first and second collars (3.4.1, 3.4.2) each have a circular inner contour and the sensors (2) have a cylindrical outer contour.

8. The sensor device according to claim 6, **characterized in that** the first collars (3.4.1) each have an end face concentrically enclosing the sleeve axis (3.0), in which end face an annular groove is formed, in which a sealing ring (4) is arranged which encloses one of the sensors (2) in a force-fitting manner.

9. The sensor device according to claim 6, **characterized in that** the first collars (3.4.1) each have a conical inner surface on which one of the sensors (2) is centered in a force-fitting manner.

10. The sensor device according to any one of the preceding claims, **characterized in that**
the holding device (1) is a monolithic component.

11. The sensor device according to claim 10, **characterized in that** an outer circumferential line of the cross-section of a sleeve (3) has a hexagonal shape and an inner circumferential line of the cross-section of the sleeve (3) has a circular shape.

## Revendications

1. Dispositif de détection destiné à l'usinage laser à balayage d'une pièce (0) au moyen d'un faisceau laser dévié par un point de rotation,
comprenant un dispositif de maintien (1) et au moins deux capteurs (2), **caractérisé en ce que**
le dispositif de maintien (1) est formé d'un agencement en forme de matrice ou de structure en nid d'abeilles de douilles reliées fixement entre elles, constitué de douilles individuelles (3) ouvertes au moins d'un côté, présentant chacune un axe de douille (3.0),
les axes de douille (3.0) se coupant en un point d'intersection (P) à l'extérieur du dispositif de maintien (1), et
les au moins deux capteurs (2), qui présentent chacun un axe de capteur (2.0), sont disposés chacun dans l'une des douilles (3) de telle sorte que leur axe de capteur (2.0) coïncide avec l'axe de douille (3.0).

2. Dispositif de détection selon la revendication 1, **caractérisé en ce que** les douilles (3) présentent chacune une paroi de douille (3.5) qui est délimitée par une première face d'extrémité (3.1) et une deuxième face d'extrémité (3.2) ou une surface de fond (3.3), et le point d'intersection (P) se trouve du côté des premières faces d'extrémité (3.1).

3. Dispositif de détection selon la revendication 2, **caractérisé en ce que** les premières faces d'extrémité (3.1) forment ensemble une surface d'accouplement continue qui est adaptée au contour de surface de la pièce à usiner (0) dans une zone d'usinage.

4. Dispositif de détection selon la revendication 2 ou 3, **caractérisé en ce que** sur au moins certaines des premières faces d'extrémité (3.1) sont formées des entretoises (5) orientées à l'opposé du dispositif de maintien (1), sur lesquelles la pièce à usiner (0) peut être appliquée.

5. Dispositif de détection selon la revendication 1, **caractérisé en ce que** le dispositif de détection comprend plus de douilles (3) que de capteurs (2), les au moins deux capteurs (2) étant ainsi disposés l'un par rapport à l'autre de manière à former un modèle sélectionnable.

6. Dispositif de détection selon la revendication 1, **caractérisé en ce que** dans les douilles (3) sont formées respectivement un premier et un deuxième épaulement (3.4.1, 3.4.2), à l'intérieur desquels est maintenu respectivement l'un des capteurs (2).

7. Dispositif de détection selon la revendication 6, **caractérisé en ce que** le premier et le deuxième épaulement (3.4.1, 3.4.2) présentent chacun un contour intérieur en forme d'anneau circulaire et les capteurs (2) présentent un contour extérieur cylindrique.

8. Dispositif de détection selon la revendication 6, **caractérisé en ce que** les premiers épaulements (3.4.1) présentent chacun une face frontale entourant concentriquement l'axe de douille (3.0) et dans laquelle est formée une rainure annulaire, dans laquelle est disposée une bague d'étanchéité (4) qui entoure par adhérence l'un des capteurs (2).

9. Dispositif de détection selon la revendication 6, **caractérisé en ce que** les premiers épaulements (3.4.1) présentent chacun une surface intérieure conique, sur laquelle l'un des capteurs (2) est appliqué de manière centrée, par adhérence.

10. Dispositif de détection selon l'une quelconque des revendications précédentes, **caractérisé en ce que**
le dispositif de maintien (1) est un composant monolithique.

11. Dispositif de détection, selon la revendication 10, **caractérisé en ce qu'**une ligne périphérique extérieure de la section transversale d'une douille (3) présente une forme hexagonale et une ligne périphérique intérieure de la section transversale d'une douille (3) présente une forme circulaire.
